# EUROPÄISCHE PATENTSCHRIFT

(11) **EP 2 554 436 B1**
(45) Veröffentlichungstag und Bekanntmachung des Hinweises auf die Patenterteilung: **16.10.2013**
(21) Anmeldenummer: 12179110.7
(22) Anmeldetag: 02.08.2012
(51) Int. Cl.: B60R 13/04

(54) **Leistenbauteil für ein Kraftfahrzeug und Herstellungsverfahren für ein Leistenbauteil**
Strip component for a vehicle and method of producing a strip component
Section de rail et procédé de fabrication d'une telle section de rail

(30) Priorität: 04.08.2011 DE 202011050900 U
(43) Veröffentlichungstag der Anmeldung: 06.02.2013
(73) Patentinhaber: DURA Automotive Body & Glass Systems GmbH, 58840 Plettenberg (DE)
(72) Erfinder: Hundt, Torsten, 58809 Neuenrade (DE); Dr. Röhner, Stefan, 44287 Dortmund (DE)
(74) Vertreter: Bungartz, Klaus Peter

(56) Entgegenhaltungen:
- WO-A2-2007/109533
- DE-A1- 19 840 295
- DE-C1- 3 704 364

## Beschreibung

### Technisches Gebiet

Die Erfindung betrifft eine zur Anbringung an einer Fahrzeugkarosserie eingerichtete und auf dem Fahrzeugdach aufliegende Dachleiste. Ein solches Leistenbauteil weist ausgehend von einem metallischen Leistengrundkörper einen mehrschichtigen Aufbau mit zumindest einer ersten unmittelbar auf dem Leistengrundkörper aufgebrachten Zwischenschicht auf, wobei in den mit der zumindest einen ersten Zwischenschicht beschichteten Leistengrundkörper eine Ausnehmung zur späteren Aufnahme eines Einsetzteils eingebracht ist und an der unmittelbar infolge des Einbringens der Ausnehmung entstandenen Oberfläche der seitlichen Begrenzungsfläche der Ausnehmung die Schichtstruktur derart freiliegt, dass die besagte Oberfläche sowohl durch den Leistengrundkörper gebildete Oberflächenbereiche als auch durch die zumindest eine Zwischenschicht gebildete Oberflächenbereiche aufweist.

Die Erfindung betrifft außerdem ein Verfahren zur Herstellung einer Dachleiste, die zur Anbringung an einer Fahrzeugkarosserie eingerichtet ist und die ausgehend von einem Leistengrundkörper einen mehrschichtigen Aufbau aufweist. Dabei wird zunächst zumindest eine erste Zwischenschicht unmittelbar auf einen Leistengrundkörper aufgebracht. Anschließend wird eine Ausnehmung in den mit der zumindest einen ersten Zwischenschicht beschichteten Leistengrundkörper zur späteren Aufnahme eines Einsetzteils derart eingebracht, dass an der unmittelbar infolge des Einbringens der Ausnehmung entstandenen Oberfläche der seitlichen Begrenzungsfläche der Ausnehmung die Schichtstruktur des mehrschichtigen Aufbaus derart freiliegt, dass die besagte Oberfläche sowohl durch den Leistengrundkörper gebildete Oberflächenbereiche als auch durch die zumindest eine Zwischenschicht gebildete Oberflächenbereiche aufweist.

Die Ausnehmungen werden später durch Einsetzteile verschlossen, beispielsweise durch eine der Dachleiste über ein Federscharnier schwenkbar angelenkte Klappe. Die Ausnehmung ermöglicht, dass nach der Endmontage am Fahrzeug Befestigungsmittel für Dachträger oder ähnliche Zusatzaufbauten durch die Dachleiste hindurchgreifen und an der Fahrzeugkarosserie befestigt werden können. Sofern nach bestimmungsgemäßer Endmontage am Fahrzeug ein Einsetzteil dauerhaft am Fahrzeug montiert verbleiben soll, kann eine schwenkbare Klappe natürlich auch entfallen.

Die Dachleisten weisen einen mehrschichtigen Aufbau auf, der ausgehend von einem metallischen Leistengrundkörper, beispielsweise einer Kunststoff- oder Aluminiumleiste, mehrere Schichten umfasst, zu denen zumindest eine erste, unmittelbar auf dem Leistengrundkörper aufgebrachte Zwischenschicht gehört. Diese erste Zwischenschicht kann zum Beispiel von einem Haftvermittler gebildet sein und deren Dicke kann nur wenige Mikrometer betragen. Der ersten, unmittelbar auf dem Leistengrundkörper aufgebrachten Zwischenschicht können weitere Zwischenschichten folgen, beispielsweise eine auf der ersten Zwischenschicht aufgebrachte Hart-PVC oder Weich-PVC Schicht sowie eine weitere auf der letztgenannten Schicht aufgebrachte Folie. Abschließend wird das Leistenbauteil bevorzugt in Wagenfarbe endlackiert.

### Stand der Technik

WO 2007/109533 A2 offenbart eine ähnliche Leiste, die jedoch kein Metall enthält, sondern nut gegen das Eindringen von Wasser geschützt werden muß. Bei den vorbekannten Dachleisten, so etwa bei der in der deutschen gattungsgemäßen Offenlegungsschrift DE 198 40 295 A1 offenbarten Abdeckleisten, wird die Ausnehmung vor der Endlackierung eingebracht. Dies führt dazu, dass neben dem Leistengrundkörper alle zum Zeitpunkt der Einbringung der Ausnehmung vorhandenen Schichten des mehrschichtigen Aufbaus beim Einbringen der Ausnehmung durchtrennt werden, so dass an den seitlichen Begrenzungsflächen der Ausnehmungen die Schichtstruktur freiliegt. Die Oberfläche der seitlichen Begrenzungsflächen weist also sowohl Oberflächenbereiche auf, die durch das Material des Leistengrundkörpers gebildet sind, als auch solche Oberflächenbereiche, die durch die Materialien der einzelnen Schichten gebildet sind, wobei die von den Schichten gebildeten Oberflächenbereiche je nach Schichtdicke, Schichtanzahl und Winkelstellung der seitlichen Begrenzungsfläche von einigen Mikrometern bis etwa ein bis zwei Millimeter breit bzw. hoch sein können.

Bei der Herstellung herkömmlicher Dachleisten wird im Anschluss an das Einbringen der Ausnehmung zunächst das Einsetzteil an der Leiste befestigt, so dass Leisten und Einsetzteil gleichzeitig in einem Lackiervorgang endlackiert werden. Dies soll die absolute Farbidentität des endlackierten Einsetzteils und der Dachleiste sicherstellen und einen nach der Endlackierung erforderlichen zusätzlichen Montageschritt entbehrlich machen. Die seitlichen Begrenzungsflächen der Ausnehmung werden in diesem Fall nicht mitlackiert, weil sie im Lackierschatten des Einsetzteils stehen.

Werden mit so hergestellten Leisten Tests auf Korrosions- bzw. Witterungsbeständigkeit durchgeführt, beispielsweise ein Salzsprühtest, ist festzustellen, dass die freiliegende Schichtstruktur eine Schwachstelle sein kann. Versuche haben gezeigt, dass zum Beispiel bei dem für die Bewertung der Korrosionsbeständigkeit solcher Dachleisten eingesetzten CASS Test (Copper Accelerated Salt Spray Test) erste Haftungsverlusterscheinungen nach weniger als 50 Stunden auftreten können und sich im Randbereich der Ausnehmung die Schichten unter unerwünschter, äußerlich sichtbarer Bläschenbildung voneinander ablösen. Insbesondere die erste, unmittelbar auf den Leistengrundkörper aufgebrachte Zwischenschicht erweist sich als Schwachstelle, da die korrosive Atmosphäre insbesondere das Aluminium des Leistengrundkörpers angreift.

Die Anforderungen an die Korrosionsbeständigkeit solcher Leistenbauteile wird von den Fahrzeugherstellern immer weiter verschärft. Ziel ist derzeit, dass eine solche Dachleiste einen CASS Test über einen Zeitraum von mindestens 240 Stunden schadlos übersteht.

### Kurzbeschreibung der Erfindung

Aufgabe der Erfindung ist es daher, eine Dachleiste der eingangs genannten Art und ein Verfahren zu deren Herstellung zur Verfügung zu stellen, deren Korrosions- bzw. Witterungsbeständigkeit deutlich erhöht ist. Das Verfahren soll dabei mit möglichst geringem Aufwand realisierbar sein und möglichst keine zusätzlichen Schichten oder Materialien als die bisher ohnehin schon verwendeten erfordern.

Hinsichtlich der Dachleiste löst die Erfindung die Aufgabe dadurch, dass auf der Dachleiste eine der zumindest einen Zwischenschicht nachfolgende Deckschicht aufgebracht ist, welche die unmittelbar infolge des Einbringens der Ausnehmung entstandene Oberfläche der seitlichen Begrenzungsfläche als Schutzschicht bedeckt. Hinsichtlich des Verfahrens zur Herstellung eines solchen Bauteils ist vorgesehen, eine der zumindest einen Zwischenschicht nachfolgende Deckschicht derart aufzubringen, dass die Deckschicht die unmittelbar infolge des Einbringens der Ausnehmung entstandene Oberfläche der seitlichen Begrenzungsfläche als Schutzschicht bedeckt.

Hierdurch ist gewährleistet, dass die infolge der Einbringung der Ausnehmung in die Dachleiste an den Begrenzungsflächen freiliegende Schichtstruktur nach Einbringen der Ausnehmung durch eine Schutzschicht bedeckt wird, so dass die Dachleiste eine die Schnittkante der Ausnehmung umgreifende, nahtlos in die Leistenbauteiloberfläche übergehende Schutzschicht aufweist. Das Eindringen von korrosiven Medien ist nun erheblich erschwert. Versuche zeigen, dass durch eine solche Maßnahme die CASS Test Beständigkeit der Bauteile mehr als vervierfacht werden kann.

Die Deckschicht kann grundsätzlich von einer Zwischenschicht gebildet sein, die der ersten, unmittelbar auf dem Leistengrundkörper aufgebrachten ersten Zwischenschicht, nachfolgt. Bevorzugt ist als Deckschicht die oberste Schicht der Dachleiste. Sie wird bevorzugt als letzte Schicht des mehrschichtigen Aufbaus auf den Leistengrundkörper aufgebracht.

Insbesondere dann, wenn der mehrschichtige Aufbau der Dachleiste neben einer zum Beispiel von einem Haftvermittler gebildeten ersten Zwischenschicht eine zweite von einem Hart- oder Weichkunststoff gebildete Zwischenschicht (Schichtdicke etwa 500 µm) und gegebenenfalls eine dritte von einer Folie gebildete Zwischenschicht (Schichtdicke etwa 200 µm) aufweist, lässt sich die Deckschicht aufgrund der Schichtdicken der zweiten und der gegebenenfalls vorhandenen dritten Zwischenschicht nur sehr schwer durch diese Zwischenschichten selbst realisieren, weil diese sich nicht zuverlässig um die Schnittkante der Ausnehmung herum legen lassen und sich die Ausnehmung nicht in den geforderten Toleranzen abbilden lässt.

Demnach ist die Deckschicht vorteilhaft vom Lack der Endlackierung der Dachleiste gebildet. Die Dicke der Lackschicht ist im Voraus für die Maßhaltigkeit der Ausnehmung ausreichend bestimmbar und der Lack legt sich aufgrund seiner beim Auftrag noch niedrigen Viskosität zuverlässig auf die seitlichen Begrenzungsflächen der Ausnehmung und bedeckt die freiliegende Schichtstruktur sowie den Teil von deren Oberfläche, der durch den Leistengrundkörper gebildet ist, sicher haftend. Die seitliche Begrenzungsfläche der Ausnehmung, insbesondere die nach Einbringung der Ausnehmung zunächst freiliegende Schichtstruktur, wird so sicher vor dem Eindringen der korrosiven Medien und einem auftretenden Haftungsverlust zwischen den Schichten geschützt.

Die Dachleiste kann zwischen der ersten, unmittelbar auf den Leistengrundkörper aufgebrachten Zwischenschicht und der Deckschicht weitere Zwischenschichten aufweisen, die nacheinander auf dem Leistengrundkörper aufgebracht werden. Wird die Ausnehmung unter Freilegung der Schichtstruktur in das Leistenbauteil eingebracht, so werden die seitlichen Begrenzungsflächen der Ausnehmung bevorzugt vor dem Aufbringen der Endlackierung gereinigt, insbesondere entfettet, um eine besonders gute Haftung des Lacks zu erreichen.

Die Reinigung und/oder Entfettung ist bevorzugt in den Prozess des Einbringens der Ausnehmung in das Leistenbauteil implementiert und wird automatisiert vorgenommen, um ein späteres, manuelles Reinigen und/oder Entfetten, was arbeits- und kostenintensiv sowie fehleranfällig wäre, zu vermeiden. Bevorzugt findet der Reinigungs- bzw. Entfettungsvorgang unmittelbar nach dem Einbringen der Ausnehmung statt. Hierzu kann vorgesehen sein, dass am Stanzwerkzeug oder an einem an der Stanzeinrichtung vorgesehenen Auswerfer eine Reinigungsvorrichtung angeordnet ist, die im selben Arbeitsgang, in dem auch das Ausstanzen der Ausnehmung oder das Auswerfen des ausgestanzten Bauteils erfolgt, die Schnittkante und die Begrenzungsflächen reinigt.

Um sicherzustellen, dass die seitlichen Begrenzungsflächen mit einer ausreichend dicken und geschlossenen Deckschicht, insbesondere einer Lackschicht versehen werden, ist vorgesehen, dass Deckschicht unter Wechsel der Lackierrichtung oder durch eine Mehrzahl von in unterschiedliche Richtung weisenden Lackierdüsen auflackiert wird. Dabei sollte allerdings darauf geachtet werden, dass an dem Leistengrundkörper vorgesehene Funktionsteile, die nicht ebenfalls mit der Deckschicht versehen werden sollen, im Lackierschatten gehalten werden. Das Einsetzteil wird dagegen abseits von der Ausnehmung lackiert, bevorzugt jedoch auf dem gleichen Lackiergestell. Hierdurch ist die gewünschte absoluter Farbidentität gewährleistet. Die Gefahr, dass das Einsetzteil die mit der Deckschicht zu versehenen seitlichen Begrenzungsflächen der Ausnehmungen in den Lackierschatten stellt, ist damit jedoch ausgeschlossen. Der sich daraus ergebende Nachteil, das auf eine Vormontage des Einsetzteils verzichtet werden muss, was einen weiteren, der Endlackierung nachfolgenden Montageschritt erfordert, wird hingenommen.

Weitere Merkmale und Vorteile der Erfindung ergeben sich aus den Unteransprüchen und aus der nachfolgenden Beschreibung bevorzugter Ausführungsbeispiele anhand der Zeichnungen.

### Kurze Beschreibung der Zeichnungsfiguren

In den Zeichnungen zeigt:

Fig. 1 ein erstes veranschaulichendes Beispiel einer an sich bekannten Dachleiste mit randseitig an der Dachleiste eingebrachten Ausnehmungen für randseitig angeordnete Klappen,

Fig. 2 ein zweites veranschaulichendes Beispiel einer an sich bekannten Dachleiste mit mittig in der Dachleiste eingebrachten Ausnehmungen für in der Dachleiste eingebettete Klappen,

Fig. 3a eine erste Stufe bei der Herstellung der Dachleiste vor der Einbringung der Ausnehmung,

Fig. 3b eine zweite Stufe bei der Herstellung der Dachleiste unmittelbar nach der Einbringung der Ausnehmung, und

Fig. 3c eine dritte Stufe bei der Herstellung der Dachleiste nach der Endlackierung.

### Beschreibung der Ausführungsarten

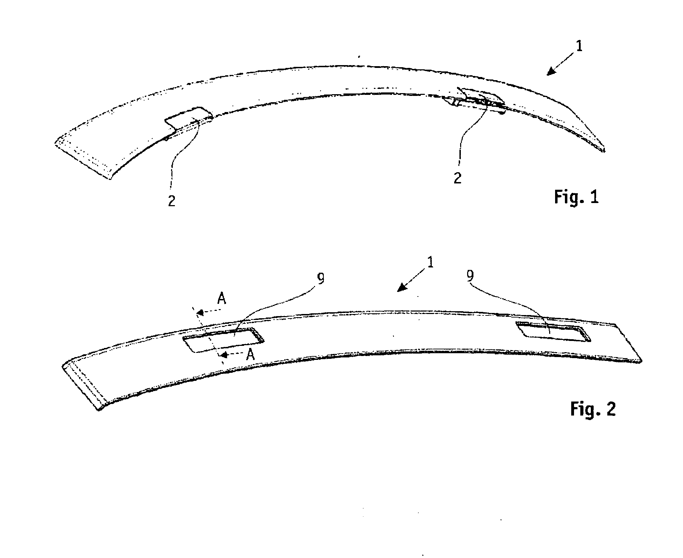

In Figur 1 und Figur 2 ist jeweils ein an sich bekanntes Leistenbauteil in Form einer Dachleiste 1 gezeigt. Die in den beiden Figuren gezeigten Dachleisten 1 unterscheiden sich insbesondere dadurch, dass bei der in Figur 1 gezeigten Dachleiste die Ausnehmungen 9 randseitig in der Leiste angebracht sind und die Dachleiste mit bereits eingesetzten Einsetzteilen in Form von eingesetzten Klappen 2 gezeigt ist. In der in Figur 2 gezeigten Dachleiste sind die Klappen noch nicht eingesetzt und die Ausnehmungen 9 sind nicht wie in Figur 1 randseitig angeordnet. Die Erfindung ist für beide Arten von Dachleisten gleichermaßen sinnvoll einsetzbar.

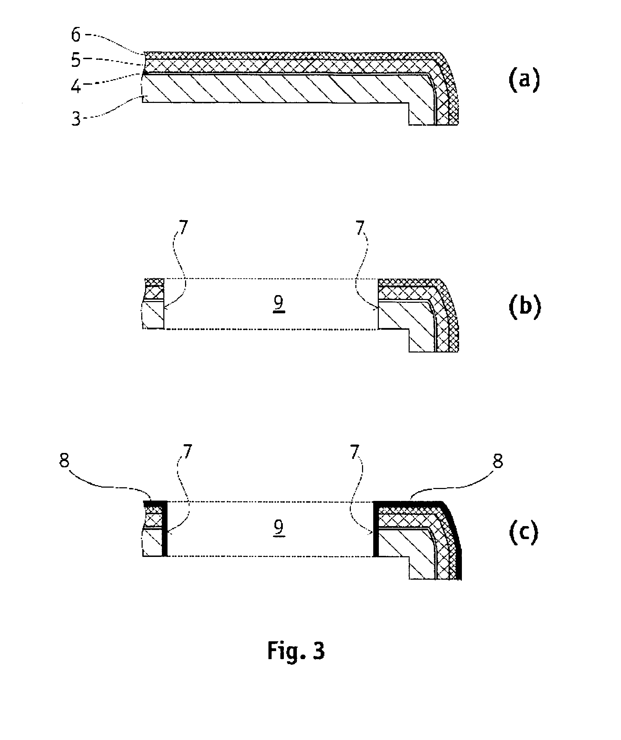

Figuren 3a bis 3c zeigen verschiedene Stufen bei der Fertigung der Dachleisten. Figur 3a zeigt einen aus einem metallischen Werkstoff bestehenden Leistengrundkörper 3, der als Grundkörper des Leistenbauteils diesem die erforderliche Stabilität verleiht. Der Leistengrundkörper 3 ist aus Korrosions-, Gewichts- und Verarbeitungsgründen bevorzugt aus einem Aluminiumwerkstoff hergestellt, kann aber auch aus geeignetem Stahlwerkstoff hergestellt sein. Nachfolgend wird von einem Aluminiumleistengrundkörper ausgegangen, ohne dass die Erfindung auf einen solchen Grundkörperwerkstoff beschränkt wäre.

Auf dem Aluminiumleistengrundkörper 3 ist eine Zwischenschicht eines Haftvermittlers 4 aufgetragen, der die Aufgabe hat, eine sichere Haftung der der Haftvermittlerschicht nachfolgenden Zwischenschicht und dem Aluminiumleistengrundkörper 3 herzustellen. Die dem Haftvermittler nachfolgende Zwischenschicht ist von einer Weich- oder Hart-Kunststoffschicht 5 gebildet, die auf den mit dem Haftvermittler versehenen Leistengrundkörper koextrudiert wird. Bevorzugt kommt PVC zum Einsatz. Die Schicht kann aber auch mit anderen geeigneten Kunststoffen wie beispielsweise TPE aufgebaut sein.

Die Kunststoffschicht 5 dient dazu, etwaige Oberflächenunebenheiten, die bei der Herstellung des Leistengrundkörpers 3 entstehen, auszugleichen. Ohne eine solche Kunststoffzwischenschicht 5 würden Walz- oder Strangpressstrukturen, die sich bei der Herstellung des Aluminiumleistegrundkörpers 3 unvermeidbar auf dessen Oberfläche abbilden, durch die später zu erfolgende Endlackierung hindurch an der Oberfläche des endlackierten Bauteils durchkommen, was es mit Blick auf die hohen Qualitätsanforderungen unbedingt zu vermeiden gilt.

Auf der Kunststoffschicht ist eine weitere Zwischenschicht aufgebracht, die von einer Folie mit exzellenten Oberflächeneigenschaften gebildet ist. Diese hat das Ziel, eine für die Endlackierung geeignete Oberfläche zu schaffen und letzte noch in der Kunststoffschicht 5 enthaltene Unebenheiten auszugleichen. Die Folie ist derart beschaffen, dass sie sowohl hinsichtlich ihrer Oberflächenrauigkeit als auch hinsichtlich ihrer Eigenschaft, als Haftgrund zu dienen, für die Endlackierung geeignet ist. Die Folie wird bevorzugt auf die noch nicht ausgekühlte, duktile Kunststoffschicht 5 aufgedrückt, was zu einem weiteren Ausgleich etwaiger Unebenheiten führt.

Sofern die Kunststoffschicht 5 bereits eine für die Endlackierung geeignete Oberfläche bildet oder sofern die Folie 6 unmittelbar auf die Haftvermittlerzwischenschicht 4 oder den Leistengrundkörper 3 aufgebracht werden kann und bereits dadurch eine einwandfreie, für die Endlackierung geeignete Oberfläche entsteht, können natürlich nicht erforderliche Zwischenschichten entfallen.

Figur 3b zeigt das Leistenbauteil gemäß der in Figur 2 angedeuteten Schnittlinie A - A unmittelbar nach Einbringen einer Ausnehmung in die Dachleiste 1. Die Ausnehmung wird bevorzugt in das Leistenbauteil gestanzt, es können aber je nach den Materialien des Leistenaufbaus und je nach Eignung auch andere Verfahren zur Einbringung der Ausnehmung in das Leistenbauteil eingesetzt werden.

Durch das Ausstanzen der Ausnehmung werden, wie Figur 3b anschaulich zeigt, alle Zwischenschichten 4, 5 und 6 sowie der Leistengrundkörper 3 durchtrennt. Damit liegt an den die Ausnehmung 9 begrenzenden Begrenzungsflächen 7 die Schichtstruktur frei. Die Oberfläche der Begrenzungsflächen 7 weist also neben einem Oberflächenbereich, der vom Material des Leistengrundköpers 3 gebildet ist, zumindest einen weiteren Oberflächenbereich auf, der vom Material zumindest einer Zwischenschicht gebildet ist. Bei einem Korrosionsbeständigkeitstest sind die Begrenzungsflächen 7 aufgrund der freiliegenden Schichtstruktur besonders anfällig gegenüber der aggressiv korrosiven Umgebung. Die Zwischenschichten bieten eine Angriffsfläche für korrosive Medien und erleichtern diesen, zwischen die einzelnen Schichten, insbesondere zwischen die Haftvermittlerschicht 4 und den Leistengrundkörper 3, zu dringen. In der Folge kommt es im Randbereich der Ausnehmung 9 zu unerwünschten Korrosionserscheinungen, die sich auch an der Oberfläche des Leistenbauteils abzeichnen, und damit zu einem Versagen des Bauteils beim Test führen.

Insbesondere das bevorzugte Ausstanzen der Ausnehmungen 9 aus der mit dem mehrschichtigen Aufbau versehenen Leiste kann die Anfälligkeit der Begrenzungsflächen 7 für Korrosion begünstigen. Die Qualität der Schnittkanten und Begrenzungsflächen 7 der Ausnehmung 9 kann durch die Qualität des Fertigungsprozesses und des verwendeten Werkzeugs oder durch dessen Zustand mitbeeinflusst werden. Es besteht bei einem unsauberen Durchtrennen der einzelnen Schichten, beispielsweise bedingt durch eine nicht optimale Prozessführung oder bei Verwendung eines bereits teilverschlissenen Werkzeugs die Gefahr, dass die Schichtgrenzen durch die Scherkräfte beim Durchtrennen im Bereich der Begrenzungsflächen aufgespreizt werden, was das Eindringen von korrosiven Medien begünstigt.

Um die Begrenzungsflächen zu schützen, ist vorgesehen, dass das Leistenbauteil nun, wie Figur 3c illustriert, ohne zuvor eingesetztes Einsetzteil endlackiert wird. Entgegen der üblichen und bevorzugten Praxis, die vorsieht, vor der Endlackierung das Einsetzteil am Leistenbauteil anzubringen, um das Bauteil unmittelbar nach der Endlackierung auslieferbereit zu wissen, und um eine absolute Farbidentität zu gewährleisten, wird auf die an sich vorteilhafte Vorabanbringung des Einsetzteils am Leistenbauteil verzichtet. Ein vom Einsetzteil verursachter Lackierschatten, der eine ausreichende Lackierung der Begrenzungsfläche verhindert, ist damit nicht zu befürchten, so dass die in Figur 3c schwarz dargestellte Deckschicht 8, die durch den bei der Endlackierung aufgebrachten Lack gebildet ist, eine die Begrenzungsflächen 7 überziehenden Schutzschicht bildet und die Begrenzungsflächen 7 somit wirksam versiegelt.

Das Einsetzteil 2 wird also erst nach der Endlackierung des Leistenbauteils an diesem endmontiert, wobei dies nicht ausschließt, dass das Einsetzteil 2 beim Lackiervorgang an dem noch nicht endlackierten Leistenbauteil über eine Hilfsvorrichtung oder Ähnliches temporär gehalten ist oder auf demselben Lackiergestell wie das Leistenbauteil positioniert wird, solange das Einsetzteil derart angeordnet ist, dass es keinen Lackierschatten für die Begrenzungsflächen 7 beim Lackiervorgang verursachen kann. Dies gewährleistet die angestrebte Farbidentität und verhindert auch chargenbedingte Schwankungen in der Farbe, die entstehen können, wenn Leistengrundkörper und Einsetzteil vollständig getrennt voneinander lackiert werden würden.

Die durch die Endlackierung entstehende Deckschicht kann selbstverständlich in sich auch mehrschichtig sein, da der Endlackierungsvorgang üblicherweise in dem Auftragen mehrerer Lackschichten erfolgt, insbesondere einer Farblackschicht und einer diesen abdeckenden Klarlackschicht sowie gegebenenfalls weiterer Lackschichten. Sofern in dieser Anmeldung von einer Lackschicht die Rede ist, kann diese also in sich mehrschichtig sein.

### Liste der Bezugszeichen

1 Leistenbauteil, Dachleiste

2 Einsetzteil, Klappe

3 metallischer Leistengrundkörper

4 erste Zwischenschicht, Haftvermittler

5 weitere Zwischenschicht, Kunststoffschicht

6 weitere Zwischenschicht, Folie

7 Begrenzungsfläche

8 Deckschicht, Lack der Endlackierung

9 Ausnehmung

## Patentansprüche

1. Zur Anbringung an einem Fahrzeugdach vorgesehene Dachleiste (1), die ausgehend von einem Leistengrundkörper (3) einen mehrschichtigen Aufbau mit zumindest einer ersten unmittelbar auf dem Leistengrundkörper (3) aufgebrachten Zwischenschicht (4) aufweist, wobei in den mit der zumindest einen ersten Zwischenschicht (4) beschichteten Leistengrundkörper (3) eine Ausnehmung (9) zur späteren Aufnahme eines Einsetzteils (2) eingebracht ist und an deren infolge des Einbringens der Ausnehmung (9) entstandenen Oberfläche der seitlichen Begrenzungsfläche (7) der Ausnehmung (9) die Schichtstruktur des mehrschichtigen Aufbaus freiliegt, **dadurch gekennzeichnet, dass** auf der Dachleiste (1) eine der zumindest einen Zwischenschicht (4) nachfolgende Deckschicht (8) aufgebracht ist, welche die infolge des Einbringens der Ausnehmung (9) entstandene Oberfläche der seitlichen Begrenzungsfläche (7) als Schutzschicht bedeckt.

2. Dachleiste nach Anspruch 1, **dadurch gekennzeichnet, dass** die Deckschicht (8) die oberste Schicht der Dachleiste (1) ist.

3. Dachleiste nach Anspruch 1 oder Anspruch 2, **dadurch gekennzeichnet, dass** die Deckschicht (8) vom bei der Endlackierung der Dachleiste (1) verwendeten Lack gebildet ist.

4. Dachleiste nach einem der vorhergehenden Ansprüche, **dadurch gekennzeichnet, dass** zwischen der ersten, unmittelbar auf den Leistengrundkörper (3) aufgebrachten Zwischenschicht (4) und der Deckschicht (8) weitere Zwischenschichten (5, 6) vorhanden sind.

5. Verfahren zur Herstellung einer zur Anbringung auf einem Fahrzeugdach eingerichteten Dachleiste (1), die ausgehend von einem Leistengrundkörper (3) einen mehrschichtigen Aufbau aufweist, umfassend die Verfahrensschritte Aufbringen zumindest einer ersten Zwischenschicht (4) unmittelbar auf einen Leistengrundkörper (3), Einbringen einer Ausnehmung (9) in den mit der zumindest einen ersten Zwischenschicht (4) beschichteten Leistengrundkörper zur späteren Aufnahme eines Einsetzteils (2) derart, dass an der infolge des Einbringens der Ausnehmung (9) entstandenen Oberfläche der seitlichen Begrenzungsfläche (7) der Ausnehmung (9) die Schichtstruktur des mehrschichtigen Aufbaus freiliegt, Aufbringen einer der zumindest einen Zwischenschicht (4) nachfolgenden Deckschicht (8) derart, dass die Deckschicht (8) die infolge des Einbringens der Ausnehmung (9) entstandene Oberfläche der seitlichen Begrenzungsfläche (7) als Schutzschicht bedeckt.

6. Verfahren nach Anspruch 5, **dadurch gekennzeichnet, dass** die Deckschicht (8) als letzte Schicht des mehrschichtigen Aufbaus auf den Leistengrundkörper (3) aufgebracht wird.

7. Verfahren nach Anspruch 6, **dadurch gekennzeichnet, dass** die Deckschicht (8) durch den bei der Endlackierung aufgebrachten Lack gebildet wird.

8. Verfahren nach einem der Ansprüche 5 bis 7, **dadurch gekennzeichnet, dass** nach der ersten, unmittelbar auf den Leistengrundkörper (3) aufgebrachten Zwischenschicht (4) weitere Zwischenschichten (5,6) aufgebracht werden.

9. Verfahren nach einem der Ansprüche 5 bis 8, **dadurch gekennzeichnet, dass** die Deckschicht (8) unter Wechsel der Lackierrichtung und/oder durch eine Mehrzahl von in unterschiedliche Richtung weisenden Lackierdüsen auflackiert wird.

10. Verfahren nach einem der Ansprüche 5 bis 9, **dadurch gekennzeichnet, dass** die Oberflächen der infolge der Einbringung der Ausnehmung (9) entstandenen Begrenzungsflächen (7) vor dem Aufbringen der Deckschicht (8) gereinigt und/oder entfettet werden.

11. Verfahren nach dem vorhergehenden Anspruch, **dadurch gekennzeichnet, dass** der Reinigungs- bzw. Entfettungsvorgang unmittelbar nach dem Einbringen der Ausnehmung stattfindet.

12. Verfahren nach dem vorhergehenden Anspruch, **dadurch gekennzeichnet, dass** am Stanzwerkzeug oder an einem an der Stanzeinrichtung vorgesehenen Auswerfer eine Reinigungsvorrichtung angeordnet ist, die im selben Arbeitsgang, in dem das Ausstanzen oder Auswerfen erfolgt, die Schnittkante und die Begrenzungsflächen reinigt.

13. Verfahren nach einem der Ansprüche 5 bis 10, **dadurch gekennzeichnet, dass** die Dachleiste (1) beim Endlackieren von dem Einsetzteil (2) getrennt lackiert wird.

## Claims

1. A roof strip (1) provided for mounting on a vehicle roof, which roof strip, starting from a strip base body (3) has a multi-layered structure with at least a first intermediate layer (4) applied directly on the strip base body (3), wherein a recess (9) for subsequently receiving an insert part (2) is introduced into the strip base body (3) which is coated with the at least one first intermediate layer (4), and on whose surface of the lateral boundary area (7) of the recess (9) produced as a result of the introduction of the recess (9) the layer structure of the multi-layered construction is exposed, **characterized in that** a covering layer (8), following the at least one intermediate layer (4), is applied on the roof strip (1), which covering layer covers as a protective layer the surface of the lateral boundary area (7) which was produced as a result of the introduction of the recess (9).

2. The roof strip according to Claim 1, **characterized in that** the covering layer (8) is the uppermost layer of the roof strip (1).

3. The roof strip according to Claim 1 or Claim 2, **characterized in that** the covering layer (8) is formed by the lacquer which is used in the final lacquering of the roof strip (1).

4. The roof strip according to one of the preceding claims, **characterized in that** further intermediate layers (5, 6) are present between the first intermediate layer (4) applied directly onto the strip base body (3) and the covering layer (8).

5. A method for the production of a roof strip (1), arranged for mounting on a vehicle roof, which roof strip, starting from a strip base body (3) has a multi-layered structure, comprising the method steps of applying at least a first intermediate layer (4) directly onto a strip base body (3), introducing a recess (9) into the strip base body, coated with the at least one first intermediate layer (4), for subsequently receiving an insert part (2), such that on the surface of the lateral boundary area (7) of the recess (9), which was produced as a result of the introduction of the recess (9), the layer structure of the multi-layered construction is exposed, applying a covering layer (8) following the at least one intermediate layer (4), such that the covering layer (8) covers, as a protective layer, the surface of the lateral boundary area (7) which was produced as a result of the introduction of the recess (9).

6. The method according to Claim 5, **characterized in that** the covering layer (8) is applied as the final layer of the multi-layered construction onto the strip base body (3).

7. The method according to Claim 6, **characterized in that** the covering layer (8) is formed by the lacquer which is applied during the final lacquering.

8. The method according to one of Claims 5 to 7, **characterized in that** further intermediate layers (5, 6) are applied after the first intermediate layer (4) which is applied directly onto the strip base body (3).

9. The method according to one of Claims 5 to 8, **characterized in that** the covering layer (8) is lacquered on with a change of the lacquering direction and/or by a plurality of lacquering nozzles pointing in different direction.

10. The method according to one of Claims 5 to 9, **characterized in that** the surfaces of the boundary areas (7) which were produced as a result of the introduction of the recess (9) are cleaned and/or degreased before the application of the covering layer (8) .

11. The method according to the preceding claim, **characterized in that** the cleaning or respectively degreasing process takes place immediately after the introduction of the recess.

12. The method according to the preceding claim, **characterized in that** a cleaning device is arranged on the punching tool or on an ejector provided on the punching device, which cleaning device cleans the cut edge and the boundary areas in the same working step in which the punching out or ejecting takes place.

13. The method according to one of Claims 5 to 10, **characterized in that** during final lacquering the roof strip (1) is lacquered separately from the insert part (2) .

## Revendications

1. Garniture de toit (1) prévue pour l'installation sur un toit de véhicule, laquelle présente, en partant d'un corps de base de garniture (3), une structure multicouches avec au moins une première couche intermédiaire (4) appliquée directement sur le corps de base de garniture (3), un évidement (9) étant réalisé dans le corps de base de garniture (3) revêtu de cette au moins une première couche intermédiaire (4) pour la réception ultérieure d'une pièce à insérer (2), et sur la surface obtenue suite à la réalisation de l'évidement (9) de la surface de délimitation latérale (7) de l'évidement (9) de laquelle la structure de couche de la structure multicouches est à découvert, **caractérisée en ce qu'**une couche de recouvrement (8) à la suite de cette au moins une couche intermédiaire (4) est appliquée sur la garniture de toit (1), laquelle recouvre la surface résultant de la réalisation de l'évidement (9) de la surface de délimitation latérale (7) en tant que couche de protection.

2. Garniture de toit selon la revendication 1, **caractérisée en ce que** la couche de recouvrement (8) est la couche la plus élevée de la garniture de toit (1) .

3. Garniture de toit selon la revendication 1 ou la revendication 2, **caractérisée en ce que** la couche de recouvrement (8) est formée par la peinture utilisée lors du peinturage final de la garniture de toit (1).

4. Garniture de toit selon l'une des revendications précédentes, **caractérisée en ce qu'**il y a d'autres couches intermédiaires (5, 6) entre la première couche intermédiaire (4) appliquée directement sur le corps de base de garniture (3) et la couche de recouvrement (8) .

5. Procédé pour la fabrication d'une garniture de toit (1) prévue pour l'installation sur un toit de véhicule, laquelle présente, en partant d'un corps de base de garniture (3), une structure multicouches, comprenant les étapes suivantes du procédé : appliquer au moins une première couche intermédiaire (4) directement sur un corps de base de garniture (3), réaliser un évidement (9) dans le corps de base de garniture revêtu de cette au moins une première couche intermédiaire (4) pour la réception ultérieure d'une pièce à insérer (2) de manière à ce que, sur la surface obtenue suite à la réalisation de l'évidement (9) de la surface de délimitation latérale (7) de l'évidement (9), la structure de couche de la structure multicouches soit à découvert, appliquer une couche de recouvrement (8) à la suite de l'au moins une couche intermédiaire (4) de manière à ce que la couche de recouvrement (8) recouvre la surface obtenue suite à la réalisation de l'évidement (9) de la surface de délimitation latérale (7) en tant que couche de protection.

6. Procédé selon la revendication 5, **caractérisé en ce que** la couche de recouvrement (8) est appliquée en tant que dernière couche de la structure multicouches sur le corps de base de garniture (3).

7. Procédé selon la revendication 6, **caractérisé en ce que** la couche de recouvrement (8) est formée par la peinture appliquée lors du peinturage final.

8. Procédé selon l'une des revendications 5 à 7, **caractérisé en ce que**, après la première couche intermédiaire (4) directement appliquée sur le corps de base de garniture (3), on applique d'autres couches intermédiaires (5, 6).

9. Procédé selon l'une des revendications 5 à 8, **caractérisé en ce que** la couche de recouvrement (8) est appliquée par peinturage en modifiant la direction de peinturage et/ou grâce à une pluralité de buses de peinture orientées dans différentes directions.

10. Procédé selon l'une des revendications 5 à 9, **caractérisé en ce que** les surfaces des surfaces de délimitation (7) obtenues suite à la réalisation de l'évidement (9) sont nettoyées et/ou dégraissées avant l'application de la couche de recouvrement (8).

11. Procédé selon la revendication précédente, **caractérisé en ce que** le processus de nettoyage et/ou de dégraissage s'effectue immédiatement après la réalisation de l'évidement.

12. Procédé selon la revendication précédente, **caractérisé en ce qu'**un dispositif de nettoyage est disposé sur l'outil d'emboutissage ou sur un éjecteur prévu sur le dispositif d'emboutissage, lequel nettoie l'arête de coupe et les surfaces de délimitation au cours de la même étape de travail que celle pendant laquelle l'emboutissage ou l'éjection ont lieu.

13. Procédé selon l'une des revendications 5 à 10, **caractérisé en ce que** la garniture de toit (1) est peinte séparément lors du peinturage final de la pièce à insérer (2).
